# EUROPEAN PATENT APPLICATION

(11) **EP 2 068 209 A1**
(43) Date of publication of application: **10.06.2009**
(21) Application number: 07806237.9
(22) Date of filing: 29.08.2007
(51) Int. Cl.: G03H 1/20, G11B 7/0065, G11B 7/135, G11B 7/28

(54) **HOLOGRAM RECORDING METHOD AND HOLOGRAM RECORDING DEVICE**

(30) Priority: 31.08.2006 JP 2006236452
(71) Applicant: Alps Electric Co., Ltd., Ota-ku Tokyo 145-8501 (JP)
(72) Inventor: SOMENO, Yoshihiro, Tokyo 145-8501 (JP)
(74) Representative: Klunker . Schmitt-Nilson . Hirsch
(86) International application number: PCT/JP2007/066760
(87) International publication number: WO 2008/026637

(57) **Abstract**

The hologram recording device and the hologram recording method for recording the data stored in the master recording body on the recording medium in the form of the hologram allow the use of the compact light source and reduce the power consumption. A recording medium 20 is stacked on a master recording body 10, to which reference beams 35 are applied each at an incident angle of θ1. The interference between diffracted beams 36 diffracted in the data storage sections 11a, 11b,... of the master recording body 10 and the reference beams 35 in the recording medium 20 occurs such that the data are transferred to the recording medium 20. The use of plural compact light sources for emitting the reference beams 35 allows the recording device to be compact while reducing the power consumption.

## Description

### Technical Field

The present invention relates to a hologram recording method and a hologram recording device for recording a hologram on a recording medium which contains a photosensitive material based on the data stored in a data storage section of a master recording body.

### Background Art

Generally, the method for copying the data stored in the master recording body to the recording medium disclosed in Patent Document 1 is well known as the method for recording data on the recording medium in the form of the hologram.

With the aforementioned method, the recording medium intended to record the hologram is stacked on the master recording body such that the reference beam is applied to both the master recording body and the recording medium. The reference beam is diffracted in the data storage section inside the master recording body, and the diffracted beam is applied to the recording medium. Inside the recording medium, interference occurs between the diffracted beam and the reference beam. The resultant interference fringe is recorded on the recording medium as the hologram.
Patent Document 1: Japanese Unexamined Patent Application Publication No. 2006-18864

### Disclosure of Invention

### Problem to be Solved by the Invention

As disclosed in Patent Document 1, the single reference beam is applied to substantially entire areas of the master recording body and the recording medium such that the hologram is recorded in the recording medium. The aforementioned structure for applying the single reference beam to substantially entire areas of the master recording body and the recording medium requires sufficient optical energy to be supplied to the respective data storage sections recorded on the master recording body. As a result, the use of a large-sized laser emitter with high output such as Ar laser and YAG laser is required as the light source for emitting the reference beam as described above.

The power needed for the hologram recording device may be increased, thus making it difficult to form the simple recording device which allows easy copy of the data recorded in the master recording body to the recording medium at lower costs.

The present invention provides a hologram recording method and a hologram recording device capable of recording the hologram data on the recording medium while keeping low power consumption.

### Means for Solving the Problem

The present invention provides a hologram recording method having a recording medium which contains a photosensitive material stacked on a master recording body with a data storage section for generating diffracted beam therein, in which reference beams are irradiated to both the master recording body and the recording medium each at a predetermined incident angle, and the diffracted beams diffracted in the data storage section of the master recording body and the reference beams are subjected to an interference inside the recording medium to record a hologram in the recording medium. Plural light sources are provided for emitting the reference beams so as to be irradiated to a part of the plurality of data storage sections stored in the master recording body.

In the hologram recording method according to the present invention, each reference beam emitted from plural light sources is irradiated to the data storage section as a part of the master recording body. The use of the plural light sources allows the reference beam emission section to be simply structured, and the power consumption to be reduced without lowering the reference beam power. For example, the light source may be formed of the semiconductor laser.

In the present invention, each of the reference beams has a different incident angle to the master recording body and the recording medium. The hologram corresponding to the data page stored in the data storage sections of the master recording body by an angular multiplexing may be recorded on the recording medium.

In the present invention, preferably, a relative position of the light source with respect to the master recording body and the recording medium is changed to move irradiation positions of the reference beams to the master recording body and the recording medium, respectively.

As described above, the reference beam irradiation positions emitted from the respective light sources are moved to allow the hologram to be recorded on the recording medium based on the data stored over a wide range inside the master recording body. The number of the light sources for the widely ranged data storage may be reduced to allow the recording device to be compact and inexpensive.

The present invention provides a hologram recording device which includes a mount portion on which a master recording body provided with a data storage section for generating a diffracted light therein and a recording medium which contains a photosensitive material are stacked, and plural light sources to emit the reference beams each irradiated to both the master recording body and the recording medium at a predetermined incident angle. The reference beams are irradiated to a part of the plurality of the data storage sections stored in the master recording body, and the interference between the diffracted beam diffracted in the data storage section and the reference beam occurs in the recording medium to have the hologram recorded in the recording medium.

For example, the hologram recording device according to the present invention is provided with plural collimator lenses for forming light rays emitted from the respective light sources into reference beams as parallel luminous fluxes, and an optical axis angle variable device for changing each incident angle of the reference beams to the master recording body and the recording medium by changing each angle of the reference beams which have transmitted the respective collimator lenses.

The hologram recording device according to the present invention allows the use of the semiconductor laser as each of the respective light sources.

The device according to the present invention may be provided with a relative movement unit for moving an irradiation position of the reference beam to the master recording body and the recording medium by changing a relative position of the light source with respect to the master recording body and the recording medium on the mount portion.

### Effect of the Invention

With the hologram recording method and the hologram recording device according to the present invention, the plural compact light sources are used to apply the reference beams to both the master recording body and the recording medium to realize the thin and compact structure of the device while proposing the power consumption.

### Brief Description of the Drawings

Fig. 1 is an explanatory view of a hologram recording device according to an example of the present invention.
Fig. 2 is an explanatory view of a hologram recording method according to Example 1.
Fig. 3 is an explanatory view of a hologram recording method according to Example 2.

### Reference Numerals

- 1,101: hologram recording device
- 2: mount portion
- 10: master recording body
- 11: data storage section

- 20: recording medium
- 21: data storage section
- 30: head
- 31: light source
- 32: collimator lens
- 33: optical axis angle variable unit
- 35: reference beam

### Best Mode for Carrying Out the Invention

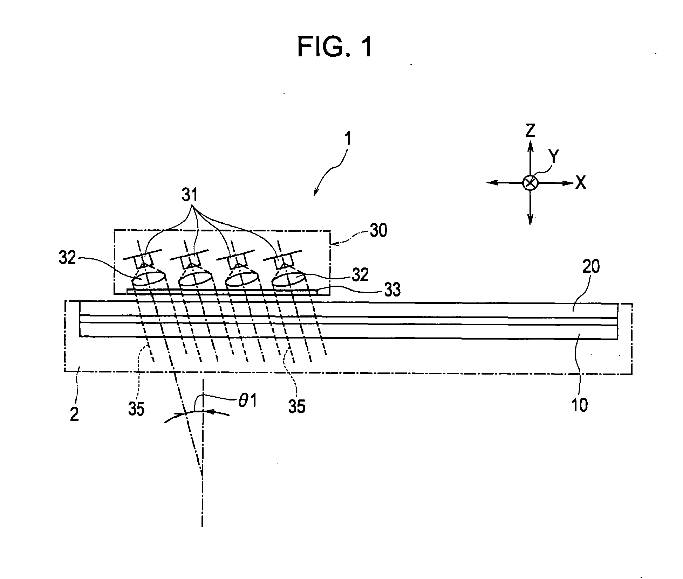

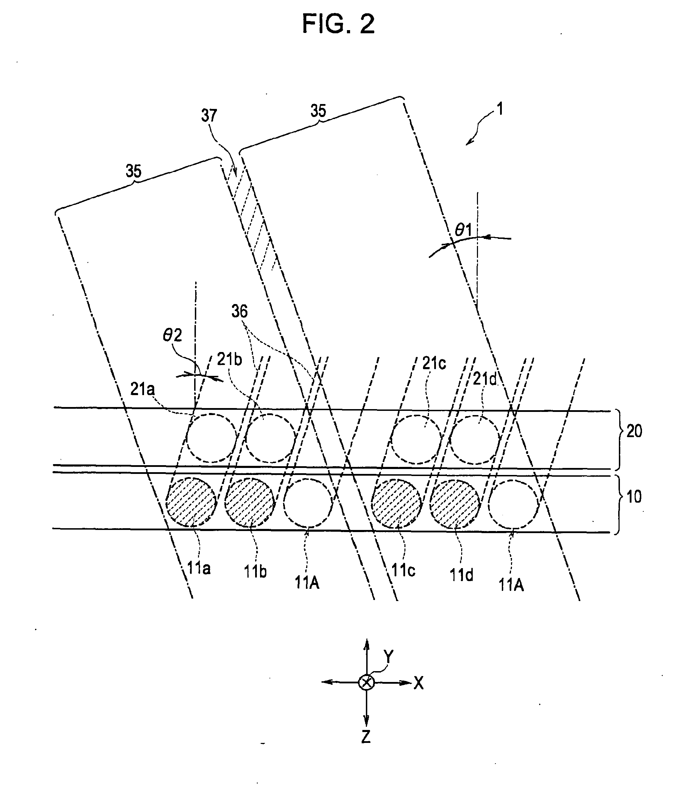

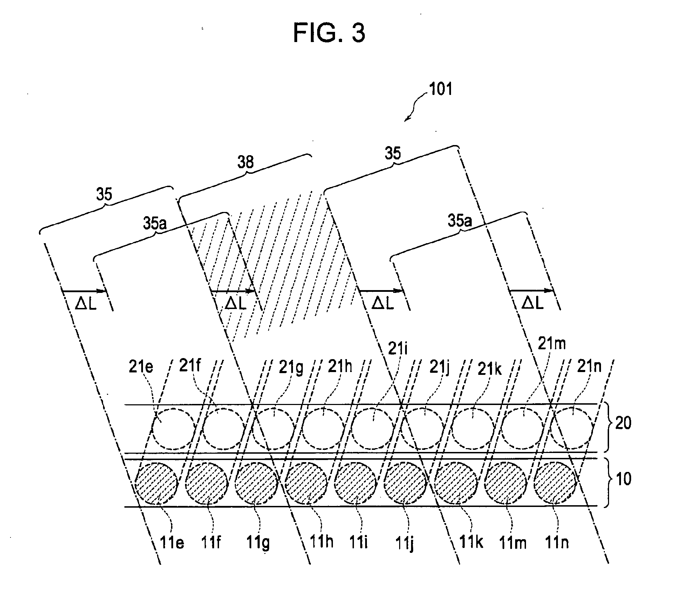

Fig. 1 is an explanatory view of the hologram recording device and the hologram recording method according to an example of the present invention. Figs. 2 and 3 are enlarged views with respect to the method for recording the hologram on the recording medium.

A hologram recording device 1 shown in Fig. 1 includes a mount table 2 as a mount portion, on which a master recording body 10 and a recording medium 20 are stacked. The master recording body 10 may be fixed onto the mount table 2, or structured to be replaceable. The recording medium 20 is set in the hologram recording device 1 so as to have the data stored in the master recording body 10 copied (transferred) thereto. That is, the recording medium 20 in the blank state is set in the hologram recording device 1. The recording medium 20 having all the data stored in the master recording body 10 recorded is removed from the hologram recording device 1. The aforementioned operations may be conducted repeatedly.

A head 30 is disposed opposite the mount table 2. Plural light sources 31 are provided inside the head 30. Each of the light sources 31 is equipped with at least one semiconductor laser. A VCSEL (surface emitting laser) is employed as the semiconductor laser. In the case where plural VCSELs are provided in each of the light sources 31, each wavelength of the plural VCSEL becomes different such that the laser with different wavelength may be emitted from the light source 31 in a predetermined band.

Collimator lenses 32 are provided opposite the respective light sources 31. The laser diffusion light emitted from the light source 31 transmits the corresponding collimator lens 32 and is formed into a reference beam 35 as a parallel luminous flux. The head 30 is provided with an optical axis angle variable unit 33 for varying the angle at which the reference beam 35 is irradiated to the recording medium 20. The optical axis angle variable unit 33 is formed by combining plural HPDLC (Holographic Polymer Dispersed Liquid Crystal) as one of diffraction gratings. Each of the HPDLCs has a different diffraction angle. The respective HPDLCs are selectively driven to change an incident angle θ1 of the optical axis of the reference beam 35 relative to the recording medium 20 and the master recording body 10.

The optical axis angle variable unit 33 may be combined with a drive mechanism for varying the position angles of the respective light sources 31 and the collimator lenses 32, or a drive mechanism for varying the position angle of only the collimator lens 32 to change the incident angle θ1 of the optical axis of the reference beam 35.

The head 30 shown in Fig. 1 is structured to apply the reference beams 35 as plural parallel luminous fluxes which have passed the optical axis angle variable unit 33 to the recording medium 20 and the master recording body 10. However, the plural reference beams 35 are irradiated only to a part of the recording area of the master recording body 10. Accordingly, in the hologram recording device 1 shown in Fig. 1, the head 30 is guided moveably in the X and Y directions along a surface of the recording medium 20 while being apart therefrom by a predetermined distance. A stepping mechanism for feeding the head 30 stepwise towards the X and Y directions is provided.

Fig. 2 is an enlarged view which represents the hologram recording method according to Example 1 using the hologram recording device 1 shown in Fig. 1.

Referring to Fig. 2, plural data storage sections 11a, 11b, 11c, 11d,... are formed in the master recording body 10. The data storage section 11 is formed by stacking portions each with a different refraction index as an interference fringe in the thickness direction. The plural data are overwritten by an angular multiplexing as the page data in the respective data storage sections 11a, 11b, 11c, 11d,.... The reference beam for recording with a predetermined wavelength λ is applied to the master recording body 10 which contains the photosensitive material from one side, and an object beam which contains data of "1(bright)" and "0(dark)" is applied to the master recording body 10 from the other side. The reference beam for recording and the object light are subjected to the interference in the master recording body 10 to bring the regions each with the different refraction index into the interference fringe state.

Referring to Fig. 2, the recording medium 20 having no data recorded thereon is placed on the master recording body 10. The reference beams 35 formed into the parallel luminous fluxes by the collimator lenses 32 are applied to both the recording medium 20 and the master recording body 10. The plural page data are stored in the respective data storage sections 11a, 11b 11c, 11d,... of the master recording body 10 by the angular multiplexing. Upon incidence of the reference beam 35 to the master recording body 10 at the angle of θ1, the incident reference beam 35 is diffracted by the interference fringe of the page data stored in any of the data storage sections 11a, 11b, 11c, 11d, ... such that diffracted beams 36 are output each at the angle of θ2.

The diffracted beam 36 reflects the data of "1","0" of the page data stored in any of the data storage sections 11a, 11b, 11c, 11d,.... The diffracted beam 36 based on the Bragg diffraction condition may have the greater intensity upon irradiation of the light with the same wavelength as that of the reference beam at the same incident angle of the reference beam during the recording. Under the Bragg diffraction condition, the incident angle θ1 of the reference beam 35 is equal to the output angle θ2 of the diffracted beam 36. The optical axis of the reference beam 35 in the head 30, which has passed the collimator lens 32 into the parallel luminous flux is bent by the interference of the optical axis angle variable unit 33 to vary the incident angle θ1 to the master recording body 10 so as to obtain the diffracted beam 36 from the page data recorded at different incident angles of the reference beams during the recording, that is, stored by the angular multiplexing.

When the reference beam 35 is applied at the predetermined incident angle θ1 to obtain the diffracted beam 36 having the page data from any of the data storage sections 11a, 11b, 11c, 11d,... of the master recording body 10 reflected, the interference between the diffracted beams 36 and the reference beams 35 occurs in the recording medium 20. The page data having the interference fringes each with the different refraction index superimposed are stored in the data storage sections 21a, 21b, 21c, 21d,... of the recording medium 20. As the incident angle θ1 of the reference beam 35 is changed to store the plural page data in the data storage sections 21a, 21b, 21c, 21d,... by the angular multiplexing. The respective page data stored in the data storage sections 21a, 21b, 21c, 21d,... of the recording medium 20 correspond to the holograms having the same contents as those of the page data stored in the data storage sections 11a, 11b, 11c, 11d,... transferred.

The blank recording medium 20 is set in the hologram recording device 1, and each of the light sources 31 in the head 30 is illuminated. The incident angle θ1 of the reference beam 35 is changed by the optical axis angle variable unit 33 to transfer the data stored in the respective data storage sections 11a, 11b, 11c, 11d,... to the recording medium 20.

With the hologram recording device 1 shown in Fig. 1, the plural reference beams 35 from the head 30 are irradiated to the limited area in the range of the data storage sections of the master recording body 10. The head is moved toward the X-Y direction after the recording operation with the head 30 to conduct the same recording operation so as to transfer the data stored in all the data storage sections of the master recording body 10 to the recording medium 20. A large number of the light sources 31 and the collimator lenses 32 may be provided so as to cover the entire area in the region where the data storage sections of the master recording body 10 are formed.

The recording medium 20 having the data transferred is removed from the hologram recording device 1, and the new blank recording medium 20 is set to be used for the recording operation.

Referring to Fig. 2, the reference beam 35 and the diffracted beam 36 output at the output angle θ2 which is the same as the incident angle θ1 intersect inside the recording medium 20 to cause the interference between the diffracted beam 36 and the reference beam 35 therein for the purpose of transferring the page data stored in the data storage sections 11a, 11b, 11c, 11d,... by the angular multiplexing to the recording medium 20 as shown in Fig. 2.

In the hologram recording device 1 according to the example, the plural light sources 31 are provided in the head 30, and the lights emitted from the respective light sources 31 are irradiated as the plural reference beams 35 in the form of the luminous fluxes. Referring to Fig. 2, a shaded portion 37 is formed between the adjacent reference beams 35. The shaded portion 37 prevents formation of the interference fringe in the recording medium 20. The data storage section at the region designated as 11A cannot be transferred to the recording medium 20. It is preferable not to form the data storage section on the region 11A in the master recording body 10.

Fig. 3 is an explanatory view of a hologram recording device 101 according to Example 2, and a hologram recording method using the hologram recording device 101.

In the hologram recording device 101, plural data storage sections 11e, 11f, 11g, 11h, 11i, 11j, 11k, 11m, 11n,... are provided at predetermined pitches with no intermittent portion inside the master recording body 10.

The reference beams 35 emitted from the light source 31 and formed into the parallel luminous fluxes through the collimator lenses 32 are arranged at intervals 38 each having the same length as the diameter of the luminous flux. When the light source 31 is illuminated to irradiate the reference beam 35, the interval 38 between the adjacent reference beams 35 becomes the shaded portion which prevents transfer of the data stored in the data storage sections 11g and 11n to the recording medium 20. Then as shown in Fig. 3, the reference beams 35, 35 are irradiated at the angle changed from the incident angle θ1 of the reference beam 35 such that the page data stored in the data storage sections 11e, 11f, 11k, and 11m by the angular multiplexing are transferred to the recording medium 20, and the head 30 is moved by ΔL. As a result, the region to which the reference beams 35, 35 are irradiated is moved by the ΔL which accords with the pitch of the data storage sections 11e, 11f,... .

Each incident angle θ1 of the reference beams 35, 35 is changed while moving the head 30 by the ΔL to transfer the data stored in the data storage sections 11f, 11g, 11m, and 11n by the angular multiplexing to the recording medium 20. The aforementioned movement by the distance ΔL is repeated three times to allow the data stored in all the data storage sections 11e, 11f, 11g, 11h, 11i, 11j, 11k, 11m, 11n,... of the master recording body 10 to be transferred to the recording medium 20.

With the aforementioned recording method, the data stored in the data storage section 11f may be written into the data storage section 21f of the recording medium 20 plural times. Accordingly, it is preferable to use the material which allows repetitive overwriting as the photosensitive material contained in the recording medium 20. The head may be moved by the distance of 2 x ΔL for conducting the recording operation.

In the hologram recording device and the hologram recording method according to the aforementioned examples, the single light source 31 has a compact structure to apply the reference beams 35 to at least one position of the large number of data storage sections rather than irradiating the reference beams to all the data storage sections of the master recording body 10 simultaneously. Accordingly, the semiconductor laser may be used as the light source 31, which allows the head 30 to be compact, and reduces power consumption.

## Claims

1. A hologram recording method having a recording medium which contains a photosensitive material stacked on a master recording body with a data storage section for generating a diffracted beam therein, in which reference beams are irradiated to both the master recording body and the recording medium each at a predetermined incident angle, and the diffracted beams diffracted in the data storage section of the master recording body and the reference beams are subjected to an interference inside the recording medium to record a hologram on the recording medium, wherein a plurality of light sources are provided for emitting the reference beams to be irradiated to a part of the plurality of data storage sections stored in the master recording body.

2. The hologram recording method according to Claim 1, wherein the light source is a semiconductor laser.

3. The hologram recording method according to Claim 1 or 2, wherein:
each of the reference beams has a different incident angle to the master recording body and the recording medium; and
the hologram corresponding to the data page stored in the data storage sections of the master recording body by an angular multiplexing is recorded on the recording medium.

4. The hologram recording method according to any one of Claims 1 to 3, wherein a relative position of the light source with respect to the master recording body and the recording medium is changed to move irradiation positions of the reference beams to the master recording body and the recording medium, respectively.

5. A hologram recording device comprising:
a mount portion on which a master recording body provided with a data storage section for generating a diffracted light therein and a recording medium which contains a photosensitive material are stacked; and
plural light sources for emitting the reference beams each irradiated to both the master recording body and the recording medium at a predetermined incident angle, wherein the reference beams are irradiated to a part of the plurality of the data storage sections stored in the master recording body, and the interference between the diffracted beam diffracted in the data storage section and the reference beam occurs in the recording medium to have the hologram recorded on the recording medium.

6. The hologram recording device according to Claim 5, further comprising a plurality of collimator lenses for forming light rays emitted from the respective light sources into reference beams as parallel luminous fluxes, and an optical axis angle variable device for changing each incident angle of the reference beams to the master recording body and the recording medium by changing each angle of the reference beams which have transmitted the respective collimator lenses.

7. The hologram recording device according to Claim 5 or 6, wherein each of the respective light sources is a semiconductor laser.

8. The hologram recording device according to any one of claims 5 to 7, further comprising a relative movement unit for moving an irradiation position of the reference beam to the master recording body and the recording medium by changing a relative position of the light source with respect to the master recording body and the recording medium on the mount portion.
